# EUROPÄISCHE PATENTSCHRIFT

(11) **EP 2 964 491 B1**
(45) Veröffentlichungstag und Bekanntmachung des Hinweises auf die Patenterteilung: **01.08.2018**
(21) Anmeldenummer: 15705202.8
(22) Anmeldetag: 13.02.2015
(51) Int. Cl.: B60R 21/215

(54) **AIRBAGDECKELSCHARNIER MIT KRAFTAUFNEHMENDEM SYSTEM**
AIRBAG COVER HINGE WITH PRESSURE-SENSING SYSTEM
CHARNIÈRE D'ÉLÉMENT DE RECOUVREMENT DE COUSSIN GONFLABLE DE SÉCURITÉ COMPRENANT UN SYSTÈME ABSORBEUR DE FORCE

(30) Priorität: 20.03.2014 DE 102014003972
(43) Veröffentlichungstag der Anmeldung: 13.01.2016
(73) Patentinhaber: K.L. Kaschier- und Laminier GmbH, 48455 Bad Bentheim-Gildehaus (DE)
(72) Erfinder: RORING, Albert, 48599 Gronau-Epe (DE)
(74) Vertreter: Cohausz Hannig Borkowski Wißgott
(86) Internationale Anmeldenummer: PCT/EP2015/000316
(87) Internationale Veröffentlichungsnummer: WO 2015/139803

(56) Entgegenhaltungen:
- EP-A1- 2 439 112
- EP-A1- 2 439 112
- EP-A1- 2 439 112
- WO-A1-2008/101681
- WO-A1-2008/101681
- DE-A1-102008 042 657
- DE-A1-102008 042 657
- DE-A1-102008 042 657
- DE-A1-102012 001 461

## Beschreibung

Die Neuerung betrifft ein Airbagdeckelscharnier mit einem textilen Scharnier, das sowohl mit einem den Airbagdeckel als auch mit einem den Airbagdeckel umgebenden Trägerteil verbindbar ist.

Beim Airbagschuss öffnet sich der Airbagdeckel, um das Heraustreten des Airbags zu ermöglichen und das Airbagdeckelscharnier ermöglicht eine Führung des Airbagdeckels beim Öffnen.

Ein Airbagscharnier aus Gewebe oder Gewirke ist bekannt. Je nach Größe des eingesetzten Airbagdeckels treten beim Airbagschuss unterschiedliche Kräfte auf das Scharnier des Airbagdeckels auf. Je größer der Airbagdeckel bzw. je schwerer ein Airbagdeckel ist, desto höher sind die auf das Scharnier auftretenden Kräfte und es ist zum einen sicherzustellen, dass sich der Airbagdeckel beim Airbagschuss leicht öffnet und zum anderen ist sicherzustellen, dass dennoch ein Lösen des Airbagdeckels von dem ihn umgebenden Trägerteil auf alle Fälle ausgeschlossen wird, um die Personen im Bereich des Airbags nicht zu gefährden.

Aus der DE 10 2008 042 657 A1 ist ein Airbagdeckelscharnier bekannt, das eine gewirkeartige erste Fadenstruktur aufweist, deren Fäden mittels Maschen an Fäden einer zweiten Fadenstruktur befestigt sind, wobei die Fäden der Strukturen unterschiedliche Reißfestigkeiten aufweisen. Die EP 2 439 112 A1 zeigt ein Airbagdeckelscharnier aus einer gewebeartige Textile, die im Schwenkbereich einen Flor aus Schlaufen aufweist. Durch die WO 2008/101681 A1 ist ein Airbagdeckelscharnier gemäß dem Oberbegriff des Anspruchs 1, mit einem Gewirke als textile Grundstruktur offenbart, das Stoppfäden aufweist deren Reißfestigkeit größer ist als die Reißfestigkeit der Fäden der textilen Grundstruktur.

Bei dem aus dem Stand der Technik bekannten Scharnier eines Airbagdeckels ist nicht auszuschließen, dass bei ungünstigen Bedingungen das als Gewebe oder Gewirke ausgeführte Scharnier reißt.

Der Neuerung liegt daher die Aufgabe zugrunde, ein Scharnier für einen Airbagdeckel derart auszubilden, dass es bei kostengünstiger Herstellbarkeit ein Reißen bzw. Lösen des Scharniers für den Airbagdeckel sicher verhindert und zudem ein leichtes Öffnen des Airbagdeckels ermöglicht.

Diese der Neuerung zugrunde liegende Aufgabe wird durch die Lehre des kennzeichnenden Teils des Hauptanspruches gelöst.

Mit anderen Worten ausgedrückt, wird ein Scharnier für einen Airbagdeckel vorgeschlagen, das eine mehrstufige textile Grundstruktur aufweist, in der Stoppfäden als Kraftaufnahmefäden integriert sind, die eine gleiche oder geringere Reißfestigkeit als auch einen längeren Weg als die textile Grundstruktur aufweisen.

Mit dieser Ausbildung werden zwei Systeme integriert, d.h. ein System, das bei Übersteigen einer definierten Zugbelastung reißt, um hierdurch einen Großteil der auftretenden Zugbelastung aufzunehmen, und ein zweites System, das ein definiertes Öffnen des Airbagdeckels (Öffnungswinkel) bei sicherem Halt realisiert.

Vorteilhafte Ausgestaltungen sind in den Unteransprüchen erläutert.

In vorteilhafter Ausgestaltung sind die "Stoppfäden" (Kraftfäden) in Richtung der Zugbelastung des Scharniers ausgerichtet, wobei eine gleichmäßige Verteilung der Stoppfäden über die textile Grundstruktur vorteilhaft ist, um z.B. bei einem Ausstanzen der Scharniere aus einem größeren Materialstück stets eine adäquate Menge an Stoppfäden in der textilen Grundstruktur zu erhalten.

In vorteilhafter Ausgestaltung ist die textile Grundstruktur gegenüber den Stoppfäden (Kraftaufnahmefäden) so ausgebildet, dass zunächst ein Reißen der Grundstruktur erfolgt.

Die Stoppfäden weisen gegenüber den Fäden der textilen Grundstruktur eine größere Länge auf und sind beispielsweise in ihrem Längsverlauf mäandrierend, zickzackförmig, schlaufenförmig, bogenförmig, wellenförmig und/oder sich selbst überdeckend ausgebildet, so dass die Stoppfäden einen Bevorratungsbereich aufweisen, der im wesentlichen quer und/oder längs zur Zugrichtung ausgebildet ist.

Eine größere Länge der Stoppfäden wird vorzugsweise dadurch erreicht, dass die Stoppfäden Schlaufen bilden, die zumindest zu einem Teil senkrecht und/oder schräg von der Oberfläche der textilen Grundstruktur abstehen oder in der Grundstruktur flach einliegen.

Die vorgeschlagene mehrstufige Struktur, bestehend aus textiler Grundstruktur und Stoppfäden (Kraftaufnahmefäden) kann ihrerseits wiederum in ein textiles Flächengebilde eingebettet werden, so dass bei einer Zugbelastung des Deckelscharniers ein Aufreißen oder Öffnen der textilen Grundstruktur mitsamt Stoppfäden (Kraftaufnahmefäden) aus diesem textilen Flächengebilde erfolgt, um durch diesen Ausreiß- oder Öffnungsvorgang bereits auftretende Kräfte zumindest zu einem gewissen Grad abzubauen und gleichzeitig den Weg zum Öffnen (Öffnungswinkel) der Airbagklappe zu definieren.

Ausführungsbeispiele der Neuerung sind in den Zeichnungen dargestellt. Es zeigen
- Fig. 1a - Fig. 1d: ein Ausführungsbeispiel der Neuerung in unterschiedlichen Stadien bei Zugbelastung auf das Scharnier,
- Fig. 1e - Fig. 1h: ein weiteres Ausführungsbeispiel in unterschiedlichen Stadien bei Zugbelastung auf das Scharnier,
- Fig. 2 und 3: weitere Ausführungen.

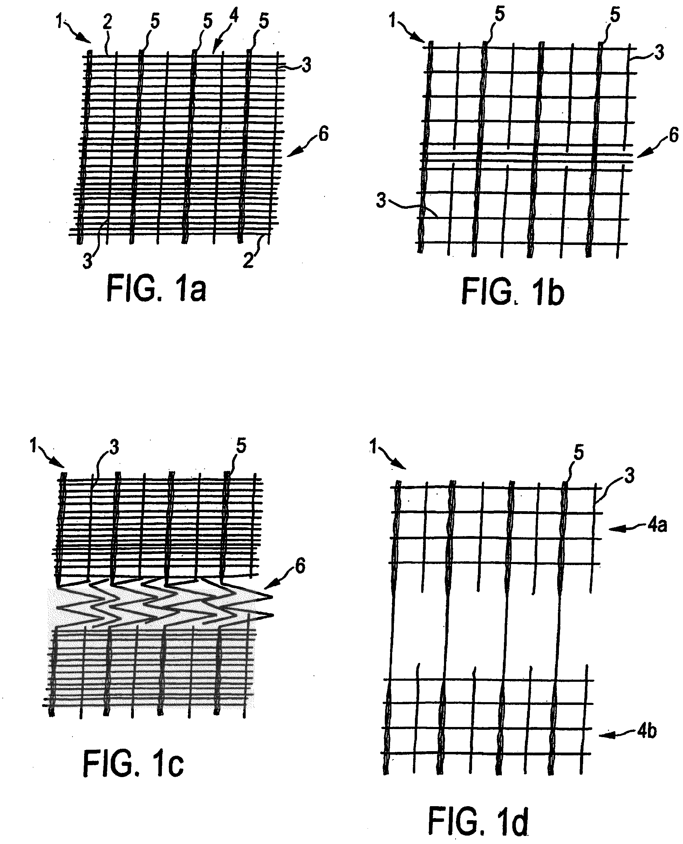

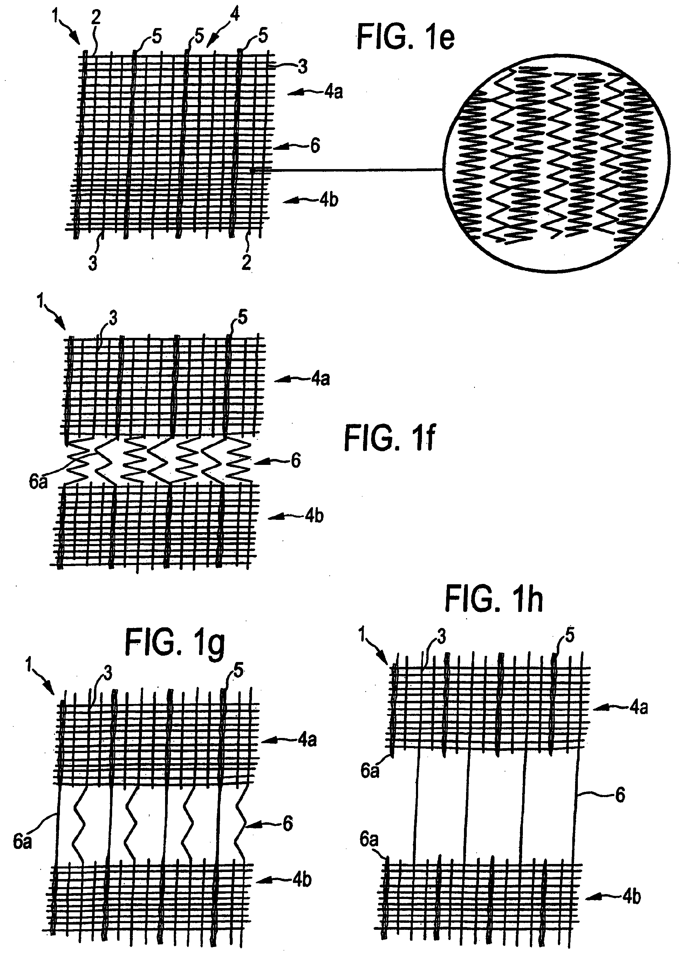

Bezug nehmend auf die Fig. 1a - Fig. 1d ist mit 1 ein Airbagdeckelscharnier dargestellt, das aus Fäden 2 und 3 einer textilen Grundstruktur 4 besteht, wobei diese textile als Gewebe ausgebildet ist.

In diese textile Grundstruktur sind sogenannte Stoppfäden 5 integriert, die eine gleiche oder geringere Reißfestigkeit wie die Fäden der Grundstruktur aufweisen, die auch aus Polyester oder anderen geeigneten Materialien bestehen.

Die Stoppfäden 5 sind in Richtung einer Zugbelastung ausgerichtet, die beim Öffnen des Airbagdeckels auf das Scharnier desselben auftritt, und weisen mindestens einen Bevorratungsbereich 6 auf, in dem die Stoppfäden im wesentlichen quer zur Zugbelastung gelagert sind.

Bevorratungsbereiche (vollflächig Fig. 1a oder Teilbereiche Fig. 1b) durch integrierte Fadenlegung (Wegbevorratung) ermöglichen eine Kraftaufnahme über die Festigkeit der Fäden als auch ein definiertes Öffnen der Airbagklappe über den möglichen Weg.

Nach Zünden des Airbags öffnet sich der den Airbag abdeckende Airbagdeckel und die im Bereich des Airbagdeckelscharniers eingearbeitete textile Grundstruktur 4 wird beim Öffnen des Scharniers gedehnt bis zum Reißen. Der Vorgang der Belastung des Scharniers ist in Fig. 1c und 1d schematisch dargestellt. Die textile Grundstruktur dehnt sich also zunächst im Bereich des Bevorratungsbereiches 6, in dem die hochfesten Stoppfäden 5 diese Dehnung der textilen Grundstruktur bis zum Reißen zulassen (Kraftaufnahme).

Im Ausführungsbeispiel der Fig. 1c wird beispielhaft der Bevorratungsbereich der Stoppfäden 5 durch das Mäandrieren bzw. Zick Zack Legen dargestellt.

Fig. 1d zeigt beispielhaft den Weg der Stoppfäden, welche beim Öffnen des Airbagdeckels freigegeben werden kann bei gleichzeitiger Kraftaufnahme durch die Stoppfäden.

Je nach Anzahl der Stoppfäden bzw. je nach Ausführung der Reißfestigkeit dieser Stoppfäden 5 wird die Gesamtfestigkeit des Airbagdeckelscharniers 1 bestimmt. Erfindungsgemäß sind jeweils zwei (Steh-) Fäden 3 der textilen Grundstruktur 4 vorhanden und schliessen sich an einen Stoppfaden 5 an, so dass über die Breite des Airbagdeckelscharniers 1 eine Abfolge von zwei Fäden 3 textiler Grundstruktur 4 und einem Stoppfaden 5 gegeben ist.

Bezug nehmend auf Fig. 1c ist bei einem weiteren Öffnen (mehrstufig) des Airbagdeckels die Situation des Airbagdeckelscharniers 1 dargestellt, in der die Fäden 3 der textilen Grundstruktur 4 durch eine Zugbeanspruchung (Dehnung) gerissen sind und sich die im Bevorratungsbereich 6 quer und/oder längs verlaufenden Stoppfäden 5 entsprechend der Zugbelastung ausrichten.

Bei einer weiteren Zugbelastung aufgrund einer breiteren Öffnung des Airbagdeckels ergibt sich die Situation entsprechend Fig. 1d, wo die kraftaufnehmenden Stoppfäden 5 die beiden nunmehr gerissenen Teilbereiche 4a und 4b der textilen Grundstruktur halten. Durch die hochfeste Ausbildung der Stoppfäden 5 wird ein Reißen des gesamten Airbagdeckelscharniers 1 sicher verhindert. Die Fadenbevorratung gibt den erforderlichen Weg zum Öffnen des Airbagdeckels frei und unterbindet gleichzeitig das nicht erwünschte Abreißen des Airbagdeckels.

Der maximale Ausdehnungsbereich des Airbagdeckelscharniers 1, d.h. der Abstand der Teilbereiche 4a und 4b der Grundstruktur 4 wird durch die Länge der querverlaufenden Stoppfäden 5 im Bevorratungsbereich 6 definiert. Die Anzahl und die Reißfestigkeit der Stoppfäden 5 muss so ausgelegt sein, dass diese nach einem Reißen der gedehnten textilen Grundstruktur 4 die restlichen Kräfte aufnehmen (Mehrstufigkeit).

Fig. 1f und g zeigen, dass die Stoppfäden zueinander unterschiedliche Längen und/oder zueinander unterschiedliche Reißfestigkeiten aufweisen können, um eine zwei- oder mehrstufige Kraftaufnahme beim Öffnen zu realisieren.

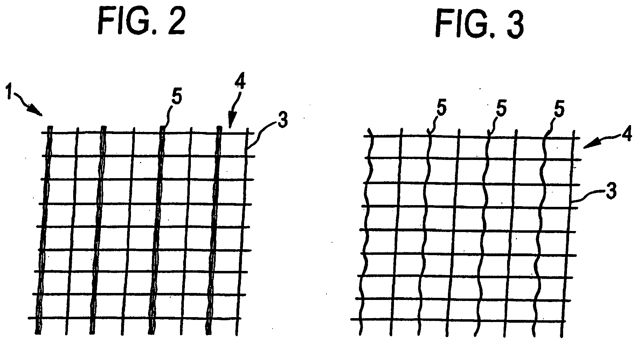

In einer weiteren Ausführungsform gemäß Fig. 2 sind die Stoppfäden 5 im wesentlichen entsprechend der Zugbelastung des Airbagdeckelscharniers 1 ausgebildet, wobei die Stoppfäden 5 eine gewisse Elastizität aufweisen und ein Dehnen und eine hierdurch bedingte Kraftaufnahme durch die textile Grundstruktur 4 ermöglichen.

Nach einem Reißen der Fäden 3 der textilen Grundstruktur 4 wird ein Zusammenhalten der gerissenen Bereiche 4a und 4b der textilen Grundstruktur gesichert bzw. ein völliges Auseinanderreißen des Airbagdeckelscharniers 1 verhindert.

In den weiteren Ausführungsformen gemäß Fig. 3 und Fig. 4 sind die Stoppfäden 5 mäandrierend bzw. zickzackförmig in die textile Grundstruktur 4 eingelagert und daher ergibt sich ein über die gesamte Länge der Stoppfäden 5 ausgebildeter "Bevorratungsbereich", so dass die Stoppfäden eine Dehnung und ein anschließendes Reißen der Fäden 3 der textilen Grundstruktur 4 ermöglichen und anschließend ein völliges Auseinanderreißen der Bereiche 4a und 4b der textilen Grundstruktur 4 verhindern.

In Fig. 4 sind die mäandrierenden bzw. zickzackförmigen Stoppfäden/Kraftaufnahmefäden im Bevorratungsbereich so eingelagert, dass die Bevorratungswege und Festigkeiten die Kraftaufnahme in der Rotationsachse der Airbagklappe definieren und den Öffnungswinkel der Airbagklappe ermöglichen und anschließend ein völliges Auseinanderreißen der Bereiche 4a und 4b der textilen Grundstruktur verhindern.

Eine besonders einfache Verlängerung der Stoppfäden wird dadurch erreicht, dass die Stoppfäden Schlaufen bilden, die zumindest zu einem Teil senkrecht und/oder schräg von der Oberfläche der textilen Grundstruktur abstehen oder flach in der Grundstruktur einliegen.

## Patentansprüche

1. Airbagdeckelscharnier mit einem textilen Scharnier, das sowohl mit dem Airbagdeckel als auch mit einem den Airbagdeckel umgebenden Trägerteil verbindbar ist, wobei das Airbagdeckelscharnier (1) eine textile Grundstruktur (4) aufweist, in der Stoppfäden (5) integriert sind, die gegenüber der textilen Grundstruktur (4) eine größere Länge aufweisen, mit einer gleichmäßigen oder ungleichmäßigen Abfolge von jeweils zwei Stehfäden (3) mit einem Stoppfaden (5), **dadurch gekennzeichnet, dass** die Stoppfäden (5) eine gleiche oder geringere Reißfestigkeit wie die Fäden der Grundstruktur aufweisen und dass, die textile Grundstruktur ein Gewebe ist.

2. Airbagdeckelscharnier gemäß Anspruch 1, **gekennzeichnet durch** in Richtung der Zugbelastung des Airbagdeckelscharniers (1) ausgerichtete Stoppfäden (5).

3. Airbagdeckelscharnier nach 1 oder 2, **dadurch gekennzeichnet, dass** die Stoppfäden Schlaufen bilden, die zumindest zu einem Teil senkrecht und/oder schräg von der Oberfläche der textilen Grundstruktur abstehen.

4. Airbagdeckelscharnier gemäß einem der vorhergehenden Ansprüche, **gekennzeichnet durch** gleichmäßig oder ungleichmäßig über die textile Grundstruktur (4) verteilte Stoppfäden (5).

5. Airbagdeckelscharnier gemäß einem der vorhergehenden Ansprüche, **gekennzeichnet durch** eine Beweglichkeit der textilen Grundstruktur (4) gegenüber den Stoppfäden (5).

6. Airbagdeckelscharnier nach einem der vorhergehenden Ansprüche, **gekennzeichnet durch** Stoppfäden (5), die im wesentlichen in Richtung der Zugbelastung des Scharniers (1) längs ausgerichtet sind, jedoch in Bevorratungsbereichen (6) zur Zugbelastung im wesentlichen quer und/oder längs ausgerichtet sind.

7. Airbagdeckelscharnier nach einem der vorhergehenden Ansprüche, **gekennzeichnet durch** Stoppfäden (5), die in ihrem Längsverlauf mäandrierend, zickzackförmig, schlaufenförmig, bogenförmig, wellenförmig und/oder sich selbst überdeckend ausgebildet sind, um den Weg zu realisieren.

8. Airbagdeckelscharnier gemäß einem der vorhergehenden Ansprüche, **gekennzeichnet durch** die Einbettung der textilen Grundstruktur (4) in ein textiles Flächengebilde, wie beispielsweise ein Gewirke.

9. Airbagdeckelscharnier nach einem der vorhergehenden Ansprüche, **dadurch gekennzeichnet, dass** die Stoppfäden zueinander unterschiedliche Längen und/oder zueinander unterschiedliche Reißfestigkeiten aufweisen.

## Claims

1. Airbag cover hinge having a textile hinge which is connectable both to the airbag cover as well as a support part surrounding the airbag cover, wherein the airbag cover hinge (1) has a main textile structure (4) in which stop threads (5), which in relation to the main textile structure (4) have a greater length, are integrated, having a regular or irregular sequence of in each case two filler threads (3) and one stop thread (5), **characterized in that** the stop threads (5) have a tensile strength which is the same as or lower than the threads of the main structure and **in that** the textile structure is a woven fabric.

2. Airbag cover hinge according to Claim 1, **characterized by**
stop threads (5) which are oriented in the direction of the tensile load of the airbag cover hinge (1).

3. Airbag cover hinge according to 1 or 2, **characterized in**
**that** the stop threads form loops which at least in part project in a perpendicular and/or oblique manner from the surface of the main textile structure.

4. Airbag cover hinge according to one of the preceding claims,
**characterized by**
stop threads (5) which are distributed in a regular or irregular manner across the main textile structure (4).

5. Airbag cover hinge according to one of the preceding claims,
**characterized by**
a mobility of the main textile structure (4) in relation to the stop threads (5).

6. Airbag cover hinge according to one of the preceding claims,
**characterized by**
stop threads (5) which are oriented so as to be substantially longitudinal in the direction of the tensile load of the hinge (1), but in reserve regions (6) for tensile loading are oriented so as to be substantially transverse and/or longitudinal.

7. Airbag cover hinge according to one of the preceding claims,
**characterized by**
stop threads (5) which, in order for the travel to be implemented, in their longitudinal profile are configured so as to be meandering, zigzag-shaped, loop-shaped, curved, undulated and/or self-covering.

8. Airbag cover hinge according to one of the preceding claims,
**characterized by**
embedding the main textile structure (4) in a two-dimensional textile structure, such as a warp-knitted fabric, for example.

9. Airbag cover hinge according to one of the preceding claims,
**characterized in**
**that** the stop threads in relation to one another have variable lengths and/or variable tensile strengths.

## Revendications

1. Charnière d'élément de recouvrement de coussin gonflable de sécurité avec une charnière textile, qui peut être reliée aussi bien à l'élément de recouvrement de coussin gonflable de sécurité qu'à la partie de support entourant l'élément de recouvrement de coussin gonflable de sécurité, dans laquelle la charnière d'élément de recouvrement de coussin gonflable de sécurité (1) présente une structure de base textile (4), dans laquelle sont intégrés des fils d'arrêt (5), qui présentent une plus grande longueur par comparaison avec la structure de base textile (4), avec une succession régulière ou irrégulière à chaque fois de deux fils fixes (3) avec un fil d'arrêt (5), **caractérisée en ce que** les fils d'arrêt (5) présentent une résistance à la déchirure égale ou inférieure aux fils de la structure de base et **en ce que** la structure de base textile est un tissu.

2. Charnière d'élément de recouvrement de coussin gonflable de sécurité selon la revendication 1, **caractérisée par** des fils d'arrêt (5) orientés dans la direction de la charge de traction de la charnière d'élément de recouvrement de coussin gonflable de sécurité (1).

3. Charnière d'élément de recouvrement de coussin gonflable de sécurité selon 1 ou 2, **caractérisée en ce que** les fils d'arrêt forment des boucles, qui sont au moins en partie saillantes perpendiculairement et/ou en oblique sur la surface de la structure de base textile.

4. Charnière d'élément de recouvrement de coussin gonflable de sécurité selon l'une quelconque des revendications précédentes, **caractérisée par** des fils d'arrêt (5) répartis de façon régulière ou irrégulière sur la structure de base textile (4).

5. Charnière d'élément de recouvrement de coussin gonflable de sécurité selon l'une quelconque des revendications précédentes, **caractérisée par** une mobilité de la structure de base textile (4) par rapport aux fils d'arrêt (5).

6. Charnière d'élément de recouvrement de coussin gonflable de sécurité selon l'une quelconque des revendications précédentes, **caractérisée par** des fils d'arrêt (5), qui sont orientés longitudinalement essentiellement dans la direction de la charge de traction de la charnière (1), mais sont cependant orientés essentiellement transversalement et/ou longitudinalement à la charge de traction dans des régions de réserve (6).

7. Charnière d'élément de recouvrement de coussin gonflable de sécurité selon l'une quelconque des revendications précédentes, **caractérisée par** des fils d'arrêt (5), qui sont configurés sous forme sinueuse, sous forme de zigzag, sous forme de boucles, sous forme d'arcs, sous forme d'ondes et/ou en se recouvrant mutuellement, afin de réaliser la course.

8. Charnière d'élément de recouvrement de coussin gonflable de sécurité selon l'une quelconque des revendications précédentes, **caractérisée par** l'intégration de la structure de base textile (4) dans un article textile plat, comme par exemple un tricot.

9. Charnière d'élément de recouvrement de coussin gonflable de sécurité selon l'une quelconque des revendications précédentes, **caractérisée en ce que** les fils d'arrêt présentent des longueurs différentes l'un par rapport à l'autre et/ou des résistances à la déchirure différentes l'un par rapport à l'autre.
